# EUROPEAN PATENT SPECIFICATION

(11) **EP 1 878 594 B1**
(45) Date of publication and mention of the grant of the patent: **04.03.2009**
(21) Application number: 06116989.2
(22) Date of filing: 11.07.2006
(51) Int. Cl.: B60C 23/00, B60C 23/12

(54) **A hub-bearing assembly allowing pressurized air to be supplied to the tyre of a vehicle wheel**
Lagervorrichtung für eine Radnabe um Druckluft an einen Fahrzeugreifen zu liefern
Ensemble de palier de roulement pour moyeu de roue pour donner de l'air comprimé dans un pneumatique

(43) Date of publication of application: 16.01.2008
(73) Proprietor: Aktiebolaget SKF, 415 50 Göteborg (SE)
(72) Inventor: Concu, Cristian, I-10137 Torino (IT)
(74) Representative: Fioravanti, Corrado

(56) References cited:
- EP-A2- 0 362 921
- GB-A- 191 004 972
- US-A- 2 642 110
- US-A- 5 342 177
- US-A- 5 642 946

## Description

The present invention refers to a hub-bearing assembly allowing pressurized air to be supplied to the tyre of a vehicle wheel.

There are known hub-bearing units allowing to inflate air pressurized by a source of pressurized air mounted on board of the vehicle to the tyre in order to adjust and/or monitor the air pressure of the tyres. In some known solutions according to the preamble of claim 1, as for example in US-5 642 946 and EP-A-0 362 921, radial bores are formed in the outer and inner races of the bearing for allowing pressurized air to pass to the rotating part of the hub-bearing assembly. Air pressurized by a pressurized air source mounted on board of the vehicle, which may be part of an automatic system or a system controlled by the driver, passes through special ducts obtained in the suspension standard of the wheel where the bearing is housed, then in a duct formed in the non-rotatable bearing race, then in an intermediate annular chamber between the rotatable and stationary races, then through one or more ducts formed in the hub or the rotatable race, and from here is conveyed through other ducts to the wheel rim and finally the tyre. The inlet of pressurized air takes place very near the rolling bodies in the hub-bearing assembly. Therefore it is necessary to fit special high duty sealing devices preventing pressurized air from penetrating directly into the inner part of the bearing, where the lubricating grease for lubricating the rolling bodies and the raceways. These sealing devices are expensive and develop considerable friction. Moreover, the passage of pressurized air through the bearing can shorten considerably its life, in case the above-mentioned sealing devices should be or become faulty. A tire pump with cam means located on a stationary axial and cooperating with a piston is known from US-A 5342177.

It is an object of the present invention to provide a hub-bearing assembly allowing pressurized air to be supplied to the tyre without needing a central source of pressurized air mounted on board of the vehicle, nor ducts for conveying the air from the source to the hub. Another object of the invention is to avoid the drawbacks and reduce costs connected with special high duty sealing devices.

These and other objects and advantages, that will be better understood in the following, are accomplished according to the invention by a hub-bearing assembly having the features defined in the appended claims.

A preferred, but not limiting embodiment of the invention will now be described, reference being made to the accompanying drawings, in which:
- figure 1 is an axial cross-sectional view of a hub-bearing assembly according to the invention; and

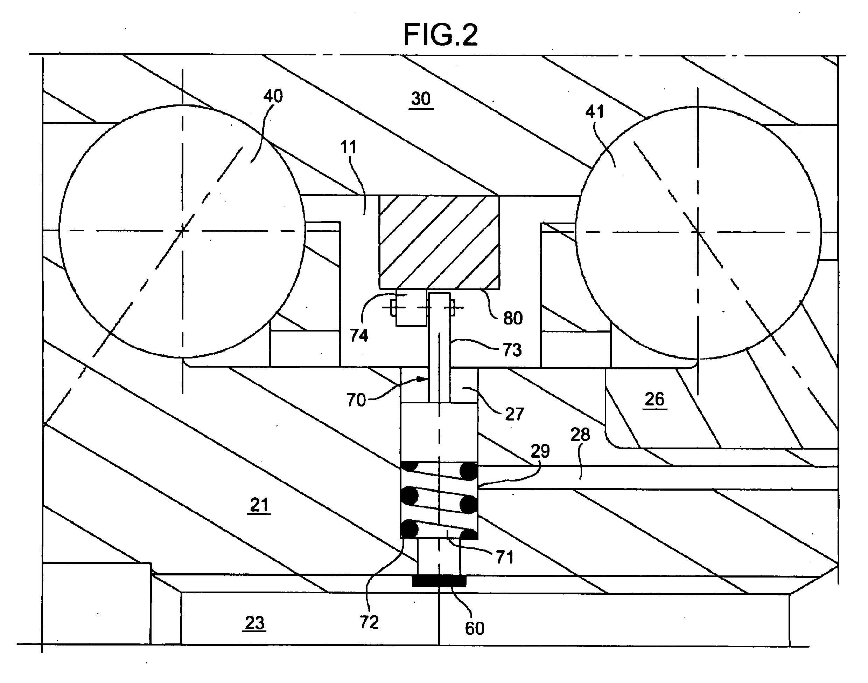

- figure 2 is an enlarged view of a detail of figure 1.

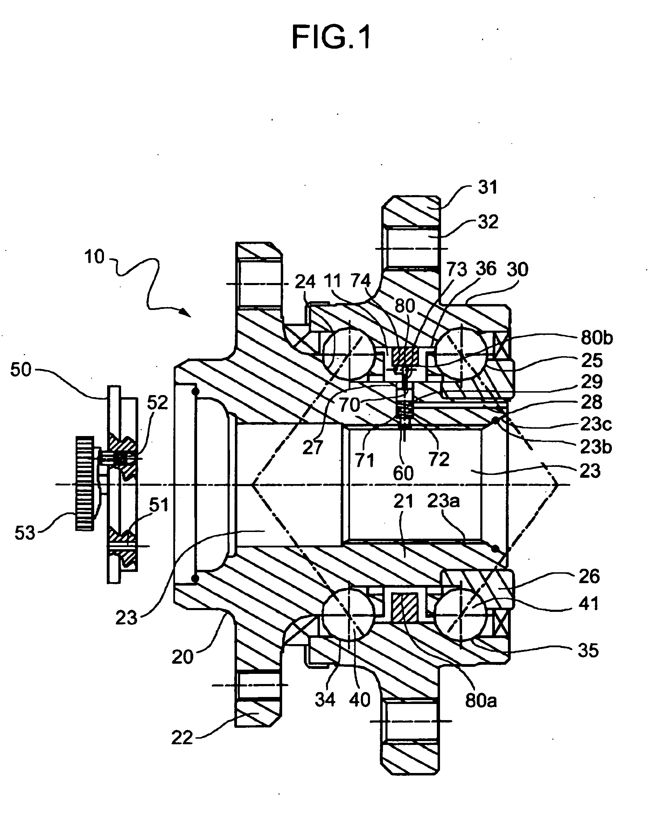

In figure 1, numeral 10 indicates overall a hub-bearing unit for a wheel of a motor vehicle, in this example a driving wheel (not shown). The unit 10 comprises a flanged, rotatable and radially inner hub 20, a non-rotatable and radially outer bearing race 30, and a dual set of rolling elements 40, 41 (in this example balls) radially interposed between the hub 20 and the outer race 30.

The outer race 30 forms a radial flange 31 extending in a radially outer direction with axial bores 32 for bolts for fastening to a suspension standard (not shown) of the vehicle.

Furthermore, outer raceways 34, 35 for the rolling elements 40, 41 are formed in the outer race 30.

The hub 20 includes an axial tubular portion 21 and a flange 22 which extends in a radially outer direction in order to fix the wheel of the vehicle to the unit 10. The tubular portion 21 forms an inner cylindrical cavity 23.

A radially inner raceway 24 for the rolling elements 40 is formed directly in the outer cylindrical surface of the tubular portion 21, whereas another radially inner raceway 25 for the rolling elements 41 is formed by an annular element 26 that is fitted onto tubular portion 21.

A cover 50 of overall disc-like shape, described in detail hereinafter, hermetically closes the cylindrical cavity 23 on the axially outer side. On the axially inner side, or inboard side, the cavity 23 can be hermetically sealed in different ways, so as to define an airtight chamber. In the example of figure 1, which refers to a hub-bearing unit for a driving wheel, the cavity 23 is hermetically sealed by a constant-velocity joint (not shown) that may be coupled for rotation to the hub by means of splines 23a. In this case, hermetic sealing action is ensured by an annular gasket 23b fitted in a conical surface 23c of the hub. In other cases, according to the kind of coupling between the hub and the constant velocity joint, the sealing action on the inboard side may be insured by a circular cap (not shown) fitted onto the hub or into the constant-velocity joint near the hub. With hub-bearing unit for non-driven wheels, those skilled in the art will recognize that the cavity 23 may be closed on the inboard side by a radial wall formed by the hub itself or a further circular cap fitted on the inboard end of the hub.

According to the invention, a mechanical compressor for supplying pressurized air to the tyre of the associated wheel is integrated in the hub-bearing unit 10. The compressor comprises a piston 70 accommodated in an essentially radial passage 27 formed through the tubular portion 21 of the hub between the cavity 23 and an annular chamber 11 defined between the outer race 30, the hub 20, the inner race 26 and the two sets of balls 40, 41.

The piston 70 is urged in a radially outer direction by an associated spring 71 resting on a transversal shoulder 72 formed in passage 27. The piston has a stem portion 73 fitted with a roller 74 engaged against a driving surface 80 secured to the non-rotatable race 30. The surface for driving the piston is preferably a surface forming one or more undulations or lobes protruding in radially inner directions, so that relative rotation between the hub and the outer race will bring about reciprocating motion of the piston 70. As an alternative, the driving surface 80 may be a surface having an oval profile, or a circular profile eccentric with respect to the central axis of rotation x of the unit 10. At any rate, the driving surface 80 has, along its circumference, distinct zones having radially differentiated distances from the axis of the bearing. In other words, one can distinguish zones 80b (as shown in the upper part of the drawing) where the surface 80 is nearer to the central axis x, and zones 80a (lower part of the drawing) where the surface 80 is farther from said axis.

The surface 80 acts like a cam that cooperates with the piston 70. In bringing about its reciprocating motion, the piston 70 does not draw air in from the annular chamber 11, which is normally filled with lubricant grease, but from a side air intake channel 28, and sends the air into cavity 23. The inlet channel 28 is formed through the hub between the axially inner side thereof and the radial passage 27, and opens on this passage at a port 29 alternately opened and closed by the piston skirt.

Indicated schematically at 60 is one-way valve, fitted in the radial passage 27 downstream of the piston 70, to prevent the pressurized air within the cavity 23 from flowing back through the passage 27 and the intake channel 28.

Formed in the outer cap 50 is a passage 51 for tightly accommodating a connector (for example a valve connector, not shown) for conveying pressurized air from the cavity 23 to the tyre through a conduit (not shown). The outer cap 50 is advantageously associated with pressure adjusting means, such as a one-way pressure tuning valve 52, which can be adjusted manually by means of an external knob 53.

In operation, rotation of the hub 20 with respect to the driving surface 80 forces the piston 70 to bring about a reciprocating motion along the passage 27, carrying out a pumping action that lets pressurized air into the cavity 23. It will be understood the flow rate of air sent by the (small) piston 70 is rather low, whereby the invention can guarantee that the correct pressure is maintained in a tyre having a small puncture, or restore the pressure in a slightly under-inflated tyre. Upon reaching the pressure threshold determined by the setting of the pressure tuning valve 52, the air exits this valve, so that the tyre pressure will not exceed that prescribed and determined by the valve 52.

It will be appreciated that the invention allows to dispense with a centralized source of pressurized air mounted on board of the vehicle, as well as relevant channels for conveying pressurized air from the source to the hub. Since the air let into the central cavity of the hub bypasses the raceways and the bearing balls or rollers, the assembly according to the invention needs no special additional sealing devices. Finally, it is not necessary to perforate the outer race of the bearing.

The invention is not intended to be limited to the embodiment described and illustrated herein, which should be considered as an example of an embodiment of the hub-bearing assembly according to the invention. Rather, the invention may be modified with regard to the shape of arrangement of parts, constructional and functional details, as will be apparent to those skilled in the art. For example, the profile of the piston driving surface, as well as the number and arrangement of pistons and air channels may vary with respect to the embodiment described and illustrated herein. Particularly, the driving surface 80 for the piston may be provided, as in the illustrated example, by a cam means consisting of an annular element fixed into the outer race 30. According to a possible alternative embodiment (not shown), the driving surface 80 may be formed by an oval, or multi-lobed or circular eccentric groove formed directly (for example machined) in the axial cylindrical cavity 36 of the outer race 30.

## Claims

1. A hub-bearing assembly allowing pressurized air to be supplied to the tyre of a vehicle wheel, the assembly comprising a hub-bearing unit (10) having
- a rotatable hub (20) fixable to the wheel of the vehicle,
- a stationary bearing race (30) fixable to the vehicle for rotatably supporting the hub about an axis (x),
- an air cavity (23) formed in the hub (20) with at least one substantially radial passage (27) for letting pressurized air into the cavity (23) and an outlet for conveying pressurized air from this cavity to the tyre;
**characterized in that** the assembly further comprises cam means (80) integral with the stationary race (30) and cooperating with at least one piston means (70) accommodated in said at least one radial passage, whereby rotation of the hub brings about reciprocating motion of the piston means along the passage (27) and lets pressurized air into the cavity (23).

2. A hub-bearing assembly according to claim 1, **characterized by** comprising a one-way valve (60), fitted in the radial passage (27) downstream of the piston means (70), for preventing air within the cavity (23) from flowing back outwardly through the passage (27).

3. A hub-bearing assembly according to claim 1 or 2, **characterized in that** the radial passage (27) communicates with an air inlet channel (28) extending between the passage (27) and an outer surface of the hub (20).

4. A hub-bearing assembly according to claim 3, **characterized in that** the air inlet channel (28) opens on the passage (27) at a port (29) alternately opened and closed by the piston means (70).

5. A hub-bearing assembly according to claim 3, **characterized in that** said outer surface of the hub (20) is a surface located at an axially inner side of the hub.

6. A hub-bearing assembly according to claim 1, **characterized in that** said piston means (70) is associated with an elastic means (71) urging the piston means towards the cam means (80).

7. A hub-bearing assembly according to claim 1 or 6, **characterized in that** said piston means (70) is provided with a low friction means (74) for engaging the cam means (80).

8. A hub-bearing assembly according to claim 7, **characterized in that** said low friction means (74) comprises a rolling element mounted on the piston means for rolling on the cam means (80).

9. A hub-bearing assembly according to claim 1, **characterized in that** said outlet for conveying pressurized air form the cavity (23) to the tyre is a bore (51) formed through an outer cap (50) hermetically sealing the cavity (23) on the axially outer side of the assembly.

10. A hub-bearing assembly according to claim 1 or 9, **characterized in that** said outlet for conveying pressurized air from the cavity (23) to the tyre is associated with pressure limiting means (52), such as a one-way pressure tuning valve.

11. A hub-bearing assembly according to claim 10, **characterized in that** the pressure limiting means (52) are associated with pressure adjusting means (53).

12. A hub-bearing assembly according to claim 1, **characterized in that** said cavity (23) is hermetically closed or closable on the axially inner side of the assembly.

13. A hub-bearing assembly according to claim 1, **characterized in that** said cam means (80) comprise a piston driving surface (80) having at least one first surface zone (80a) radially farther from the axis (x) and at least one second surface zone (80b), angularly spaced from the first zone around the axis (x) and radially nearer to this axis.

14. A hub-bearing assembly according to claim 13, **characterized in that** the piston driving surface (80) is a surface forming one or more undulations or lobes protruding in radial directions.

15. A hub-bearing assembly according to claim 13, **characterized in that** the piston driving surface (80) is a surface having an oval profile in a plane perpendicular to the axis of rotation (x).

16. A hub-bearing assembly according to claim 13, **characterized in that** the piston driving surface (80) is a surface having a circular and eccentric profile with respect to the axis of rotation (x).

17. A hub-bearing assembly according to any one of the preceding claims, **characterized in that** said cam means (80) are formed as a single piece with the stationary race (30).

18. A hub-bearing assembly according to claim 17, **characterized in that** said cam means (80) comprise a groove formed in an axial cylindrical cavity (36) of the stationary race (30).

19. A hub-bearing assembly according to any one of claims 1 to 16, **characterized in that** said cam means (80) are formed by an annular element fixed to the stationary race (30).

20. A hub-bearing assembly according to any one of the preceding claims, **characterized in that** the unit (10) comprises a dual set of rolling elements (40, 41) and that the cam means (80) and the piston means (70) are arranged in a radial plane axially intermediate the tow sets of rolling elements (40, 41).

21. A hub-bearing assembly for a motor vehicle wheel according to any one of the preceding claims, wherein the hub-bearing unit (10) includes an angular contact ball bearing having a dual set of bearing balls (40, 41), the stationary race (30) being the radially outer bearing race, the hub (20) being a radially inner rotatable hub.

## Patentansprüche

1. Nabenlageranordnung, die erlaubt, einem Reifen eines Fahrzeugrades Druckluft zuzuführen, wobei die Anordnung eine Nabenlagereinheit (10) umfasst, die aufweist:
eine drehbare Nabe (20), die am Rad des Fahrzeugs befestigbar ist,
einen feststehenden Laufring (30), der am Fahrzeug befestigbar ist, um die Nabe um eine Achse (x) drehbar zu unterstützen,
einen Lufthohlraum (23), der in der Nabe (20) ausgebildet ist, mit wenigstens einem im Wesentlichen radialen Durchlass (27) zum Einlassen von Druckluft in den Hohlraum (23) und einem Auslass zum Transportieren von Druckluft von diesem Hohlraum zum Reifen;
**dadurch gekennzeichnet, dass** die Anordnung ferner Kurvenmittel (80) umfasst, die integral mit dem feststehenden Laufring (30) ausgebildet sind und mit wenigstens einem Kolbenmittel (70) kooperieren, das in dem wenigstens einen radialen Durchlass aufgenommen ist, wobei die Rotation der Nabe eine Hubbewegung des Kolbenmittels längs des Durchlasses (27) bewirkt und Druckluft in den Hohlraum (23) einlässt.

2. Nabenlageranordnung nach Anspruch 1, **gekennzeichnet durch** ein Rückschlagventil (60), das in den radialen Durchlass (27) stromabseitig des Kolbenmittels (70) eingesetzt ist, um Luft innerhalb des Hohlraums (23) daran zu hindern, **durch** den Durchlass (27) nach außen zurückzuströmen.

3. Nabenlageranordnung nach Anspruch 1 oder 2, **dadurch gekennzeichnet, dass** der radiale Durchlass (27) mit einem Lufteinlasskanal (28) in Verbindung steht, der sich zwischen dem Durchlass (27) und einer Außenfläche der Nabe (20) erstreckt.

4. Nabenlageranordnung nach Anspruch 3, **dadurch gekennzeichnet, dass** der Lufteinlasskanal (28) sich auf dem Durchlass (27) an einer Mündung (29) öffnet, die durch das Kolbenmittel (70) alternierend geöffnet und verschlossen wird.

5. Nabenlageranordnung nach Anspruch 3, **dadurch gekennzeichnet, dass** die Außenfläche der Nabe (20) eine Fläche ist, die an einer axial inneren Seite der Nabe angeordnet ist.

6. Nabenlageranordnung nach Anspruch 1, **dadurch gekennzeichnet, dass** dem Kolbenmittel (70) ein elastisches Mittel (71) zugeordnet ist, das das Kolbenmittel in Richtung zum Kurvenmittel (80) drängt.

7. Nabenlageranordnung nach Anspruch 1 oder 6, **dadurch gekennzeichnet, dass** das Kolbenmittel (70) mit einem reibungsarmen Mittel (74) für den Eingriff mit dem Kurvenmittel (80) versehen ist.

8. Nabenlageranordnung nach Anspruch 7, **dadurch gekennzeichnet, dass** das reibungsarme Mittel (74) ein Wälzelement umfasst, das auf dem Kolbenmittel montiert ist, um auf dem Kurvenmittel (80) zu wälzen.

9. Nabenlageranordnung nach Anspruch 1, **dadurch gekennzeichnet, dass** der Auslass zum Transportieren von Druckluft vom Hohlraum (23) zum Reifen eine Bohrung (51) ist, die durch einen Außendeckel (50) ausgebildet ist, der den Hohlraum (23) auf der axial äußeren Seite der Anordnung hermetisch abdichtet.

10. Nabenlageranordnung nach Anspruch 1 oder 9, **dadurch gekennzeichnet, dass** der Auslass zum Transportieren von Druckluft vom Hohlraum (23) zum Reifen mit Druckbegrenzungsmitteln (52), wie z. B. einem Rückschlag-Druckabstimmventil, versehen ist.

11. Nabenlageranordnung nach Anspruch 10, **dadurch gekennzeichnet, dass** den Druckbegrenzungsmitteln (52) Druckeinstellmittel (53) zugeordnet sind.

12. Nabenlageranordnung nach Anspruch 1, **dadurch gekennzeichnet, dass** der Hohlraum (23) hermetisch verschlossen ist oder auf der axialen Innenseite der Anordnung verschließbar ist.

13. Nabenlageranordnung nach Anspruch 1, **dadurch gekennzeichnet, dass** das Kurvenmittel (80) eine Kolbenantriebsfläche (80) umfasst, die wenigstens eine erste Oberflächenzone (80a) aufweist, die radial weiter von der Achse (x) entfernt ist, sowie wenigstens eine zweite Oberflächenzone (80b), die winkelmäßig von der ersten Zone beabstandet um die Achse (x) und radial näher zu dieser Achse angeordnet ist.

14. Nabenlageranordnung nach Anspruch 13, **dadurch gekennzeichnet, dass** die Kolbenantriebsfläche (80) eine Fläche ist, die eine oder mehrere . Wellungen oder Kurven bildet, die in radialen Richtungen hervorstehen.

15. Nabenlageranordnung nach Anspruch 13, **dadurch gekennzeichnet, dass** die Kolbenantriebsfläche (80) eine Fläche mit einem ovalen Profil in einer Ebene senkrecht zur Rotationsachse (x) ist.

16. Nabenlageranordnung nach Anspruch 13, **dadurch gekennzeichnet, dass** die Kolbenantriebsfläche (80) eine Fläche mit einem kreisförmigen und exzentrischen Profil bezüglich der Rotationsachse (x) ist.

17. Nabenlageranordnung nach irgendeinem der vorangehenden Ansprüche, **dadurch gekennzeichnet, dass** die Kurvenmittel (80) einteilig mit dem feststehenden Laufring (30) ausgebildet sind.

18. Nabenlageranordnung nach Anspruch 17, **dadurch gekennzeichnet, dass** die Kurvenmittel (80) eine Nut umfassen, die in einem axialen zylindrischen Hohlraum (36) des feststehenden Laufrings (30) ausgebildet ist.

19. Nabenlageranordnung nach irgendeinem der Ansprüche 1 bis 16, **dadurch gekennzeichnet, dass** die Kurvenmittel (80) mittels eines ringförmigen Elements gebildet sind, das an dem feststehenden Laufring (30) befestigt ist.

20. Nabenlageranordnung nach irgendeinem der vorangehenden Ansprüche, **dadurch gekennzeichnet, dass** die Einheit (10) einen doppelten Satz von Wälzelementen (40, 41) umfasst, und dass die Kurvenmittel (80) und die Kolbenmittel (70) in einer radialen Ebene axial zwischen den zwei Sätzen von Wälzelementen (40, 41) angeordnet sind.

21. Nabenlageranordnung für ein Kraftfahrzeugrad nach irgendeinem der vorangehenden Ansprüche, wobei die Nabenlagereinheit (10) ein Winkelkontaktkugellager mit einem doppelten Satz von Lagerkugeln (40, 41) enthält, wobei der feststehende Laufring (30) der radial äußere Laufring ist, und wobei die Nabe (20) eine radial innere drehbare Nabe ist.

## Revendications

1. Ensemble de roulement de moyeu permettant de fournir de l'air comprimé au pneumatique d'une roue de véhicule, l'ensemble comprenant une unité de roulement de moyeu (10) ayant :
un moyeu rotatif (20) apte à être fixé à la roue du véhicule,
une bague de roulement fixe (30) apte à être fixée au véhicule pour supporter le moyeu en rotation autour d'un axe (x),
une cavité d'air (23) formée dans le moyeu (20) avec au moins un passage sensiblement radial (27) pour l'admission d'air comprimé dans la cavité (23) et un orifice de sortie pour acheminer de l'air comprimé de cette cavité vers le pneumatique ;
**caractérisé en ce que** l'ensemble comprend en outre des moyens formant came (80) formant une seule pièce avec la bague fixe (30) et coopérant avec au moins un moyen formant piston (70) logé dans ledit au moins un passage radial, moyennant quoi la rotation du moyeu entraîne un mouvement de va-et-vient du moyen formant piston le long du passage (27) et permet l'admission d'air comprimé dans la cavité (23).

2. Ensemble de roulement de moyeu selon la revendication 1, **caractérisé en ce qu'**il comprend une soupape unidirectionnelle (60) située dans le passage radial (27) en aval du moyen formant piston (70) pour empêcher l'air situé dans la cavité (23) de revenir vers l'extérieur à travers le passage (27).

3. Ensemble de roulement de moyeu selon la revendication 1 ou 2, **caractérisé en ce que** le passage radial (27) communique avec un canal d'admission d'air (28) s'étendant entre le passage (27) et une surface externe du moyeu (20).

4. Ensemble de roulement de moyeu selon la revendication 3, **caractérisé en ce que** le canal d'admission d'air (28) donne sur le passage (27) au niveau d'un orifice (29) alternativement ouvert et fermé par le moyen formant piston (70).

5. Ensemble de roulement de moyeu selon la revendication 3, **caractérisé en ce que** ladite surface externe du moyeu (20) est une surface située au niveau d'un côté interne du moyeu dans le sens axial.

6. Ensemble de roulement de moyeu selon la revendication 1, **caractérisé en ce que** ledit moyen formant piston (70) est associé à des moyens élastiques (71) poussant le moyen formant piston vers les moyens formant came (80).

7. Ensemble de roulement de moyeu selon la revendication 1 ou 6, **caractérisé en ce que** ledit moyen formant piston (70) est muni de moyens à coefficient de frottement réduit (74) conçus pour venir en prise avec les moyens formant came (80).

8. Ensemble de roulement de moyeu selon la revendication 7, **caractérisé en ce que** lesdits moyens à coefficient frottement réduit (74) comprennent un élément roulant monté sur le moyen formant piston pour rouler sur les moyens formant came (80).

9. Ensemble de roulement de moyeu selon la revendication 1, **caractérisé en ce que** ledit orifice de sortie destiné à acheminer de l'air comprimé de la cavité (23) au pneumatique, est un alésage (51) formé à travers un couvercle externe (50) fermant hermétiquement la cavité (23) sur le côté externe de l'ensemble dans le sens axial.

10. Ensemble de roulement de moyeu selon la revendication 1 ou 9, **caractérisé en ce que** ledit orifice de sortie destiné à acheminer de l'air comprimé de la cavité (23) au pneumatique est associé à des moyens de limitation de pression (52) tels qu'une soupape unidirectionnelle de réglage de la pression.

11. Ensemble de roulement de moyeu selon la revendication 10, **caractérisé en ce que** les moyens de limitation de pression (52) sont associés à des moyens de régulation de pression (53).

12. Ensemble de roulement de moyeu selon la revendication 1, **caractérisé en ce que** ladite cavité (23) est hermétiquement fermée ou apte à l'être sur le côté interne de l'ensemble dans le sens axial.

13. Ensemble de roulement de moyeu selon la revendication 1, **caractérisé en ce que** lesdits moyens formant came (80) comprennent une surface d'entraînement de piston (80) ayant au moins une zone formant première surface (80a) radialement plus éloignée de l'axe (x) et au moins une zone formant seconde surface (80b) angulairement espacée de la première zone autour de l'axe (x) et radialement plus proche de cet axe.

14. Ensemble de roulement de moyeu selon la revendication 13, **caractérisé en ce que** la surface d'entraînement de piston (80) est une surface formant un(e) ou plusieurs ondulations ou lobes en protubérance dans les sens radiaux.

15. Ensemble de roulement de moyeu selon la revendication 13, **caractérisé en ce que** la surface d'entraînement de piston (80) est une surface ayant un profil ovale sur un plan perpendiculaire à l'axe de rotation (x).

16. Ensemble de roulement de moyeu selon la revendication 13, **caractérisé en ce que** la surface d'entraînement de piston (80) est une surface ayant un profil circulaire et excentrique par rapport à l'axe de rotation (x).

17. Ensemble de roulement de moyeu selon l'une quelconque des revendications précédentes, **caractérisé en ce que** lesdits moyens formant came (80) sont formés d'une seule pièce avec la bague fixe (30).

18. Ensemble de roulement de moyeu selon la revendication 17, **caractérisé en ce que** lesdits moyens formant came (80) comprennent une rainure formée dans une cavité axiale cylindrique (36) de la bague fixe (30).

19. Ensemble de roulement de moyeu selon l'une quelconque des revendications 1 à 16, **caractérisé en ce que** lesdits moyens formant came (80) sont formés par un élément annulaire fixé à la bague fixe (30).

20. Ensemble de roulement de moyeu selon l'une quelconque des revendications précédentes, **caractérisé en ce que** l'unité (10) comprend un double jeu d'éléments roulants (40, 41) et **en ce que** les moyens formant came (80) et les moyens formant piston (70) sont agencés sur un plan radial axialement intermédiaire aux deux jeux d'éléments roulants (40, 41).

21. Ensemble de roulement de moyeu pour roue de véhicule automobile selon l'une quelconque des revendications précédentes, dans lequel l'unité de roulement de moyeu (10) comprend un roulement à billes à contact angulaire ayant un double jeu de billes de roulement (40, 41), la bague fixe (30) étant la bague de roulement externe dans le sens radial, le moyeu (20) étant un moyeu rotatif interne dans le sens radial.
